# EUROPEAN PATENT APPLICATION

(11) **EP 1 156 652 A1**
(43) Date of publication of application: **21.11.2001**
(21) Application number: 00110688.9
(22) Date of filing: 19.05.2000
(51) Int. Cl.: H04M 3/527, H04M 3/42

(54) **Method to monitor and/or control connections in a telecommunication system**

(71) Applicant: NOVAVOX AG, 8005 Zürich (CH)
(72) Inventor: Stokar, Dieter, 8004 Zürich (CH); Mueller, Markus, 79106 Freiburg (DE)
(74) Representative: Troesch Scheidegger Werner AG

(57) **Abstract**

The invention is related to a telecommunication system comprising a public switched telephone system (1), a private branch exchange network (2) and a patch panel (3) which is, according to the invention, connected to the public switched telephone system (1) as well as to the private branch exchange network (2).

The invention has the advantage that, in order to provide additional functionality to the private branch exchange network (2), the latter need not be altered. All implementation of the additional functionality are implemented in the patch panel (3). Therefore, any private branch exchange network (2) available on the market can be enriched by said additional functionality in a short time.

## Description

The present invention relates to a telecommunication system according to the precharacterizing part of claim 1 and a method to monitor and control connections through said telecommunication system.

### Background of the invention

Private Branch Exchange networks ("PBX") are used to interconnect terminals belonging to an entity, e.g. a company. The terminals of a PBX may also communicate with terminals connected to the Public Switched Telephone Network ("PSTN") or any other PBX connected to the PSTN. For this, the PBX are connected to the PSTN, most often, over a bundle of channels, or in case of a digital telecommunication network of the type Integrated Services Digital Network ("ISDN"), over a Primary Access ("PA") and/or over one or several Basic Accesses ("BA").

Several telecommunication companies, such as ALCATEL, SIEMENS, AT&T - to mention just a few -, offer their own PBX which may be connected to the PSTN via standardized interconnections but which, as for the rest of the system, largely differ in their internal design, i.e. their internal hardware as well as their software structure. Needless to say, it is difficult to adapt or to add further functionality to these PBXs. In particular, it is utmost difficult and often impossible to provide, for example, a software module implementing such additional functionality for a PBX if the same module shall be used for PBXs of different PBX vendors. In practice, these modules must be adapted not only to each of the PBXs of the different PBX vendors but also to the different versions of PBXs of the same PBX vendor. As a result, implementing and maintaining modules having additional functionality is very costly.

### Summary of the invention

The present invention overcomes the above problems by providing a telecommunication system comprising a patch panel connected in between a Public Switched Telecommunication Network ("PSTN") and a Private Branch Exchange ("PBX") network. Additional functionality to be provided by the PBX alone, or in connection with the PSTN, can advantageously be implemented in the patch panel without having to amend system modules of the PBX. This results in cost reductions and fast system installations. Furthermore, any system updates of the connected PBX have no effect on the patch panel.

### Brief description of the drawings

Figure 1 shows a block diagram of a telecommunication system according to the present invention comprising a Public Switched Telephone Network, a Private Branch Exchange network and a Patch Panel.
Figure 2 shows various system components of the Patch Panel whereas said components are marked with labels indicating the functionality of the system components.
Figure 3 shows the Patch Panel according to the invention in a different view showing possible signal paths.

### Detailed description of the drawings

In the state of the art, it is well known to directly connect a Private Branch Exchange ("PBX") to the Public Switched Telephone Network ("PSTN") in order, for example, to connect a private telephone network of a company to the PSTN. In case the PSTN and the PBX are of the type Integrated Digital Services Network ("ISDN"), the two networks are connected by one or several primary accesses and/or by one or several basic accesses.

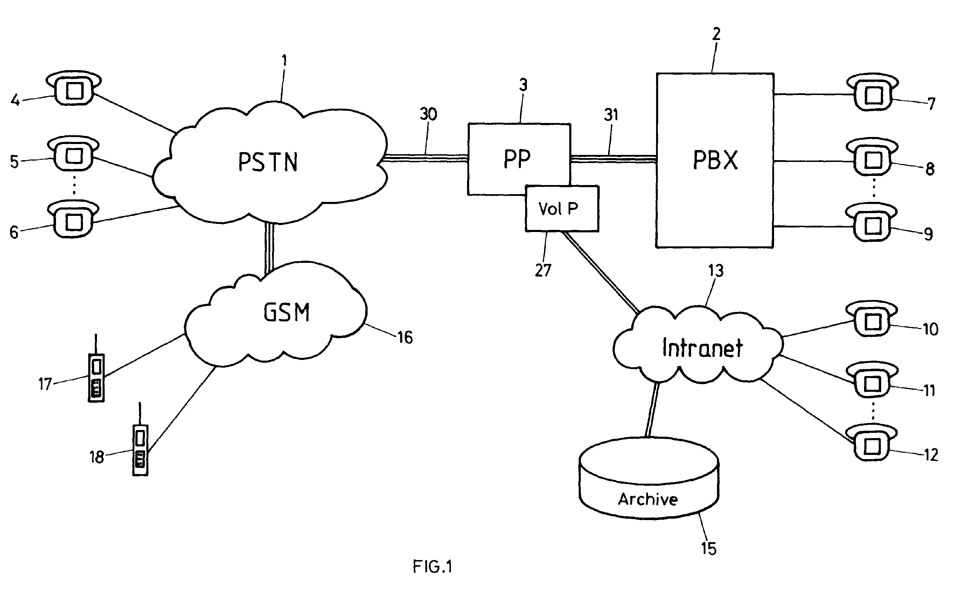

Figure 1 shows a telecommunication network comprising a PSTN 1, a PBX 2 and a patch panel 3 according to the invention. The patch panel 3 is connected to the PSTN 1 as well as to the PBX 2 over the connection lines 30, 31. In a preferred embodiment of the invention, all connections between the PSTN 1 and the PBX 2 are routed through the patch panel 3. This inventive network structure allows to add functionality to the PBX 2 without amending it, i.e. PBX 2 can be one of the several available PBXs on the market.

The telecommunication network according to the invention, comprising its basic elements - namely PSTN 1, PBX 2 and patch panel 3 - can be used, for example, to augment the PBX 2 by a subnetwork (referred to as Intranet 13 in Figure 1) to which terminals 10 to 12, such as telephones or personal computers, are connected. For this, the patch panel 3 comprises a gateway 27, such as a Voice over Internet Protocol gateway ("VOIP"), over which gateway 27 the patch panel 3 automatically redirects information, if need be, over the Intranet 13 to one or several terminals 10 to 12.

In a further embodiment, in order to redirect an incoming call to a terminal which is best suited, a storage unit 15 is provided which can be accessed via the VoIP gateway 27 and the Intranet 13 to retrieve data. This data is then used to provide the patch panel 3 and/or the selected terminal 7 to 12 with additional information, for example regarding the calling party. The described network structure is best suited for a company dealing with a large number of clients, for example, regarding different products, its maintenance or other services. The information retrieved from the storage unit 15 can, for instance, be derived from the telephone number of the calling party.

In a preferred embodiment of the invention, the information is obtained by a Interactive Voice Response ("IVR") system which is either implemented into the patch panel 3 or which is connected to the patch panel 3 as separate module. The calling party will be ask to provide certain information on request, e.g. he is asked to press a certain button on his terminal to reach the sale department, the support department or any other specified department. In addition to the information collected by this interactive dialog, additional information can be retrieved from a storage unit which is provided within the patch panel 3 or which can be accessed via the VoIP gateway 27 and the Intranet 13 as has been described above.

As shown in Figure 1 and as very well known in the state of the art, the PSTN 1 is connected to a wireless digital communication network, which may be either a cellular network 16 or a Personal Communication System ("PCS") network. The cellular network 16 can be of the type Global System for Mobile ("GSM") which is connected via a specific gateway (not shown in Figure 1) to the PSTN 1. Mobile terminals 17, 18 are used to communicate over the GSM network 16, whereas the phrase "mobile terminals" means a device for sending and receiving data over a wireless network and includes, for instance, a pager, a handset or an internet communicator that may be a Nokia 9000 GSM communicator capable of accessing the internet via the GSM network 16.

A GSM network 16 may have a number of cellular sites, each served by a tower holding a base station and appropriate equipment for receiving and transmitting wireless voice and data messages. Those messages are routed to the appropriate terminal, such as a pager, cellular handset 17, 18, cellular internet communicator, or workstation, by a mobile switching center (not shown in Figure 1). If the messages are Short Messaging Service ("SMS") messages, a mobile switching center receives each SMS message, determines it is an SMS and switches the SMS message to a Short Message Service Center ("SMSC") (not shown in Figure 1), which listens on a socket for SMS messages in order to route received SMS messages to the appropriate destination. Additionally, the SMSC receives outgoing SMS messages and reformats those messages for transmission through the MSC. Typically, SMSC may link to the PSTN over the above-mentioned gateway; SMSC can then route SMS messages to subscribers roaming in other wireless networks via the PSTN.

In a further embodiment of the present invention, the patch panel 3 is provided by a SMS control unit which is capable to receiving and to sending SMS messages. This feature of the invention opens a whole range of new applications. For instance, it is possible to initiate a call back by a SMS message, i. e. a connection is set up either by one of the terminals 10 to 12 connected to the Intranet 13 or by one of the terminals 7 to 9 connected to the PBX 2. In addition, a call back or any other function can be handled completely automatically, for instance by means of a computer in the patch panel 3.

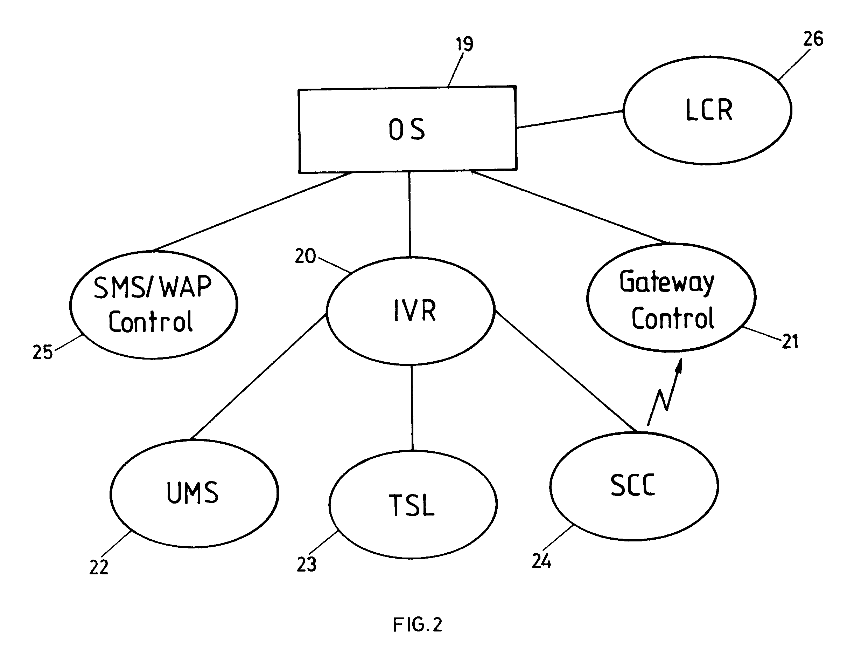

The telecommunication network according to the invention and the method to monitor and/or control connections in said telecommunication network, including further embodiments, become more apparent by the following explanation of Figure 2 which shows, in a block diagram, a possible software structure represented by modules realizing different functions performed by the patch panel 3 (Figure 1).

On the first level and in close connection to the hardware components of the patch panel 3, an Operating System ("OS") module is provided with which all further modules, either directly or through other higher ranking modules, exchange information.

For instance, in an Interactive Voice Response ("IVR") module 20 the functionality of a dialog with a caller is implemented in order to collect further information which will be processed in order to determine an optimal destination. For this, further modules are implemented, for example:
- a voice generation module to generate a voice message from printed text (not shown in Figure 2), also known under the acronym TTS-(Text to Speech)-module;
- a voice recognition module to recognize words spoken by a caller (not shown in Figure 2), also known under the acronym ASR-(Automatic Speech Recognition);
- a Telephone Service Line ("TSL") module 23;
- Unified Messaging Service ("UMS") module 22;
- Smart Call Center ("SCC") module 24;

In the following a short description of the above-enumerated modules is provided:

### Telephone Service Line ("TSL")

The TSL is an interactive voice application in particular for employees who are out of the company office. The TSL incorporates the following features:
Outgoing calls through the TSL: An employee can make an outgoing call (usually a long distance call) from anywhere via the company TSL which is incorporated into the company PBX. The employee enters the number to call and is automatically connected to the desired number by the company PBX, i.e. by its TSL.
Call forwarding: Employees can have all calls addressed to their extension forwarded to voicemail, to a secretary, or to any number they choose. Employees can set, modify, or cancel a call forwarding destination without direct access to the corresponding extension.
Call back: An employee can have the TSL call him back, so the company pays for the call. Furthermore, by using this feature, the employee can use a Least Cost Routing module which will be described later on and which can be used to optimize connection expenses through selecting a special telephone service provider.

### Unified Messaging System ("UMS")

The UMS extends the functionality of a messaging and collaboration client, as, for example, of the Microsoft Outlook or of the Microsoft Exchange Server. It unites e-mail, fax and voice messages in one service. In a common environment all messages can be accessed, managed and grouped by various criteria, regardless of the media. The UMS also enables the user to send files to a fax machine, rather than to a printer.

### Smart Call Center ("SCC")

The SCC distributes incoming calls among agents, provides them with all pertinent information about the caller, provides the means to enter and store notes about the call, enables the agent to announce his readiness for the next caller, and delivers basic statistics.

Furthermore, a SMS and/or Wireless Application Protocol ("WAP") module 25 is provided in which SMS messages, as explained above, are handled.

In case a Intranet 13 is connected to the patch panel 3 via a VoIP gateway 27 as shown in Figure 1, a corresponding module, a so called gateway protocol module 21, is provided in which the related functionality is embedded.

In a further embodiment of the invention, a Least Cost Routing ("LCR") module 26 is provided to optimize connection expenses through selecting a telephone service provider that offers its services at minimum costs for a specific destination. In the LCR module 26 one or more of the following functions are incorporated:
- cost optimization for calls from terminals 7 to 12 to terminals 4 to 6 and 17, 18 of the PSTN 1 (Figure 1) and of the GSM network 16 (Figure 1), respectively;
- call back procedures initiated by a terminal 4 to 6 and 17, 18 of the PSTN 1 (Figure 1) and of the GSM network 16 (Figure 1), respectively;

The above-mentioned call back procedure can alternatively be initiated by a SMS message.

In a further embodiment of the invention, an encryption module is provided (not shown in Figure 2) which module allows to encrypt selected connections in order to secure private calls over the PSTN and/or within the PBX. Automatic encryption can be provided for all connections over the PSTN between two or more PBXs connected to the PSTN provided that each of the PBXs comprises an encryption module and the necessary encryption keys.

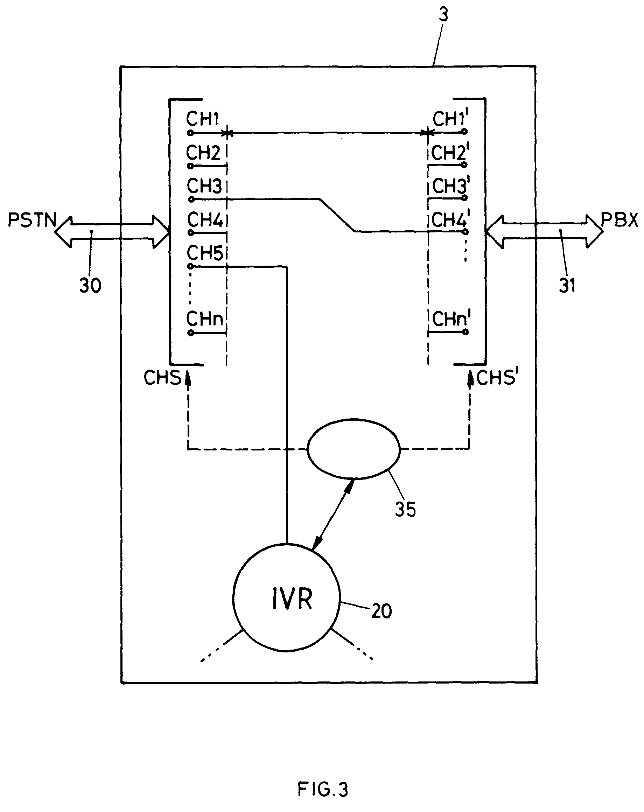

In Figure 3 the patch panel 3 according to the invention is schematically represented showing different possible signal paths. As has been stated above, the patch panel 3 is connected in between the PSTN and the PBX. Usually, the connection consists of one or several Primary Rate Accesses 30, 31, each comprising, for example, thirty 64 kbit/s data channels CH1, ..., CHn, CH1', ..., CHn' and one 64 kbit/s signaling channel CHS, CHS'. Other configurations are possible without leaving the scope of the invention.

Basically, between the following signal paths can be differentiated:
First, as is illustrated by the connection CH1-CH1', data and signaling information can be transferred through the patch panel 3 as if it does not exist, i.e. data and signaling information, the latter via a signaling unit 35, pass through the patch panel 3 without being altered. This is, in a preferred embodiment of the invention, true for all connections, if the patch panel is in a passive state, e.g. after starting up. In this passive state, which is also the default state after the start up or any system error or power failure, the patch panel is completely transparent, i.e. as if it is not present.
Second, as it is illustrated by the connection CH3-CH4', data may be switched from one channel CH3 to another selected channel CH4', i.e. a selected subscriber having, for example, a subscriber number "123" is routed to a subscriber having, for example, a subscriber number "456".
Third, as it is illustrated by the connection between CH5 and the IVR module 20, an incoming call is redirected to the Interactive Voice Response system in order to obtain additional information from the caller before rerouting the call to a certain destination or in order that the call can be routed to a preferred destination.
Forth, it is possible according to the invention that only signaling information and/or data in the signaling channel CHS, CHS' is transferred between the Primary Rate Accesses 30, 31, i.e. no data channel CH1, ..., CHn; CH1', ..., CHn' is active.

It must be noted that, dependent on the type of connection, the signaling information must be altered accordingly. This functionality is incorporated into the signaling unit 35 as well as any transfer of information which is needed by the IVR module 20.

It must be further noted that Figure 3 only shows the principle structure, functions and possibilities performed by the patch panel 3. Additional functions have been described while explaining Figure 2.

## Claims

1. A telecommunication system comprising:
- a public switched telephone network (1), and
- a private branch exchange network (2),
**characterized in that** a patch panel (3) is provided, whereas said patch panel (3) is connected to said public switched telephone network (1) as well as to said private branch exchange network (2).

2. A system according to claim 1, **characterized in that** all information exchanged between said public switched telephone network (1) and said private branch exchange network (2) are routed through said patch panel (3).

3. A system according to claim 1 or 2, **characterized in that** said patch panel (3) comprises or is connected to an interactive voice response system (20).

4. A system according to claims 1 to 3, **characterized in that** said interactive voice response system (20) comprises:
- a unified message service unit (22); and/or
- a telephone service line unit (23); and/or
- a call center unit (24).

5. A system according to claim 4, **characterized in that** at least one of the units (22, 23, 24) comprised in said interactive voice response system (20) is controllable by short message service messages which are transmitted over the GSM network (16) via a short message center coupled to a mobile switching center within the GSM network (16).

6. A system according to any preceding claims,
**characterized in that** said patch panel (3) comprises a least cost routing unit (26).

7. A system according to any preceding claims,
**characterized in that** said patch panel (3) comprises a gateway (27) to a private network (13).

8. A system according to claim 7, **characterized in that** a storage unit (15) is provided, which is connected to said private network (13).

9. A system according to claim 7 or 8, **characterized in that** terminals (7, ..., 9) are provided which are connected to said private network (13).

10. A method to monitor and/or control connections between a public switched telephone network (1) and a private branch exchange network (2), the method comprising:
- providing a patch panel (3) connected between said public switched telephone network (1) and said private branch exchange network (2);
- controlling and, if need be, redirecting information to be exchanged between said public switched telephone network (1) and said private branch exchange network (2); and
- enhancing said information to be exchanged by adding more information.

11. A method according to claim 10, **characterized in that** said additional information is collected by an interactive voice response system (20).

12. A method according to claims 10 or 11, **characterized in that** said additional information is obtained from a storage unit (15).

13. A method according to claim 10 or 12, **characterized in that** a terminal or a group of terminals (7, ..., 12) is selected by analyzing said additional information.

14. A method according to claims 10 to 13, **characterized in that** a connection between any terminals (4, ..., 12; 17, 18) will be established by sending a short message service message to said patch panel (3), whereas in said message data are provided concerning the connection to be established.

15. A method according to claims 10 to 14, **characterized in that** the method further comprises the step of transmitting data over a private network (13) which is preferably an Internet protocol network.

16. A method according to claims 10 to 15, **characterized in that** the method further comprises the step of controlling the routing through the public switched telephone network (1) by the patch panel (3).

17. A method according to claim 16, **characterized in that** said routing through the public switched telephone network (1) is governed by least cost optimization.

18. A method according to claims 10 to 17, **characterized in that** said patch panel (3) is switched into a transparent mode after system start up, and/or upon power failure, and/or upon detecting a system error.
